# EUROPÄISCHE PATENTSCHRIFT

(11) **EP 1 380 481 B1**
(45) Veröffentlichungstag und Bekanntmachung des Hinweises auf die Patenterteilung: **18.08.2004**
(21) Anmeldenummer: 03022704.5
(22) Anmeldetag: 01.02.2001
(51) Int. Cl.: B60S 1/08, B60H 1/00

(54) **Sensoranordnung**
Sensor arrangement
Dispositif capteur

(30) Priorität: 11.02.2000 DE 10006219
(43) Veröffentlichungstag der Anmeldung: 14.01.2004
(62) Teilanmeldung aus: 01905719.9
(73) Patentinhaber: E + E ELEKTRONIK GESELLSCHAFT M.B.H., A-4210 Engerwitzdorf (AT)
(72) Erfinder: Nikolaus, Gerhard, 4210 Engerwitzdorf (AT)
(74) Vertreter: Hofmann, Ernst

(56) Entgegenhaltungen:
- EP-A- 0 723 897
- EP-A- 0 801 302
- US-A- 4 812 615
- US-A- 5 804 719

## Beschreibung

Die vorliegende Erfindung betrifft eine Sensoranordnung, die insbesondere zur Erfassung des Beschlagens der Innenseite einer KFZ-Scheibe geeignet ist.

Zur Vermeidung des Beschlagens von KFZ-Scheiben sind bereits eine Reihe von Lösungen bekannt geworden. So wird etwa in der US 4,408,660 vorgeschlagen, auf Basis der Ausgangssignale verschiedenster Sensoren die KFZ-Klimaanlage geeignet zu regeln, um derart ein Beschlagen zu verhindern. Zu den eingesetzten bzw. erforderlichen Sensoren gehört u.a. ein Feuchtesensor, mit dem die relative Feuchte oder der Taupunkt an der jeweiligen KFZ-Scheibe gemessen wird. Zur konkreten Ausgestaltung des Feuchtesensors finden sich in dieser Druckschrift jedoch keine weiteren Hinweise. Zudem ist beim vorgeschlagenen Regelungskonzept zumindest ein weiterer Sensor erforderlich, mit dem die Temperatur gemessen wird, d.h. es resultiert ein relativ hoher Sensorik-Aufwand. Dokument EP 0 723 897 A zeigt als nächstliegender Stand der Technik eine Sensoranordnung, welche mittels einer Klebschicht auf einer Glasscheibe befestigt ist.

Eine weitere Lösung des oben angesprochenen Problems sieht die Verwendung eines Infrarot-Sensors zur Bestimmung der Oberflächentemperatur eines Bereiches der KFZ-Scheibe vor. Mithilfe dieses Sensors und weiterer Feuchtesensoren im Fahrgast-Innenraum lässt sich die Innenraumfeuchte bzw. die Innenraumtemperatur über die KFZ-Klimaanlage derart regeln, dass ein Beschlagen der Scheiben zuverlässig verhindert wird. Nachteilig an dieser Variante ist der ebenfalls hohe Sensorik-Aufwand.

Zusammenfassend lässt sich zu den bisherigen Lösungen deshalb feststellen, dass diese in der Regel eine Vielzahl von Sensoren zur zuverlässigen Erfassung des Beschlagens der KFZ-Scheibe erfordern.

Aufgabe der vorliegenden Erfindung ist es daher, eine einfach aufgebaute Sensoranordnung anzugeben, die geeignet ist, das Beschlagen einer Trägerfläche, inbesondere einer KFZ-Scheibe, zuverlässig zu erfassen.

Diese Aufgabe wird gelöst durch eine Sensoranordnung mit den Merkmalen des Anspruches 1.

Vorteilhafte Ausführungsformen der erfindungsgemäßen Sensoranordnung ergeben sich aus den Maßnahmen in den abhängigen Patentansprüchen.

Die vorgeschlagenen Maßnahmen gewährleisten, dass mit Hilfe einer einzigen erfindungsgemäßen Sensoranordnung das Beschlagen einer Trägerfläche, z.B. der Innenseite einer KFZ-Scheibe, zuverlässig erfasst und somit verhindert werden kann. Zu diesem Zweck werden die Ausgangssignale der erfindungsgemäßen Sensoranordnung einer entsprechenden Klimaregelung bzw. einer geregelten Klimaanlage zugeführt. Erfasst wird über die erfindungsgemäße Sensoranordnung nunmehr lediglich die relative Feuchte auf der Trägerfläche. Hierbei ist sichergestellt, dass das verwendete Sensorelement präzise die tatsächliche relative Feuchte auf der Trägerfläche detektiert, da das Sensorelement im Messbetrieb nahezu die gleiche Temperatur wie die Trägerfläche aufweist. Über verschiedene Maßnahmen wird gewährleistet, dass lediglich eine geringfügige Temperaturdifferenz zwischen der Trägerfläche und dem Sensorelement vorliegt.

Die erfindungsgemäße Sensoranordnung ermöglicht somit eine zuverlässige Lösung der oben diskutierten Beschlags-Problematik, die lediglich einen geringen sensorischen Aufwand erfordert.

Zudem ergeben sich durch den Wegfall weiterer Sensorelemente insgesamt weniger Systemfehler, da letztlich jedes einzelne Sensorelement zum Gesamtfehler bei der Beschlagsdetektion beiträgt. Es resultiert eine höhere Systemgenauigkeit und Zuverlässigkeit.

Weitere Vorteile sowie Einzelheiten der erfindungsgemäßen Sensoranordnung ergeben sich aus der nachfolgenden Beschreibung eines Ausführungsbeispiels anhand der beiliegenden Figuren.

Dabei zeigt
- Figur 1: eine perspektivische Ansicht einer KFZ-Scheibe mit einer Sensoranordnung;
- Figur 2a und 2b: je eine Teil-Schnittansicht der Sensoranordnung aus Figur 1;
- Figur 3: eine Teil-Schnittansicht einer Ausführungsform der erfindungsgemäßen Sensoranordnung.

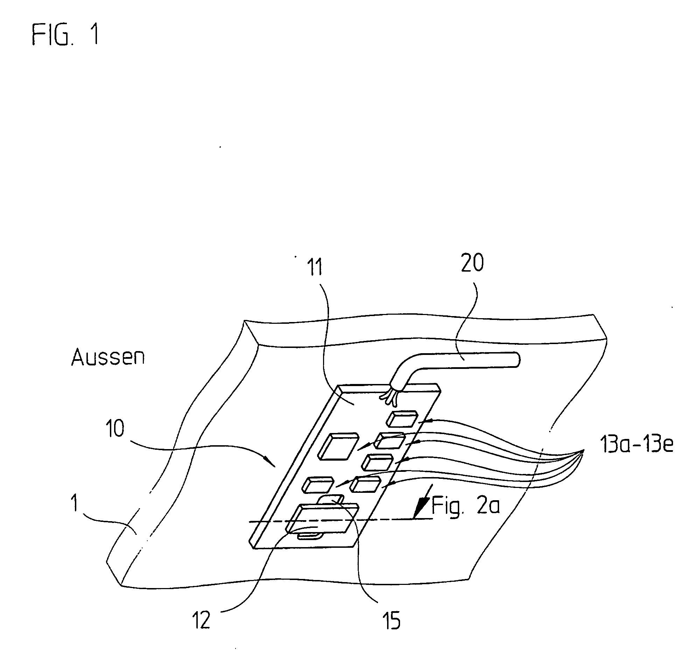

In Figur 1 ist ein Teil der Innenseite einer KFZ-Scheibe 1 dargestellt, die als Trägerfläche dient und deren Beschlagen verhindert werden soll. Auf der dem Fahrgastraum zugewandten Seite der KFZ-Scheibe 1 ist die Sensoranordnung 10 angeordnet. Die Ausgangssignale der Sensoranordnung 10 werden über ein Anschlusskabel 20 einer nicht dargestellten, geregelten KFZ-Klimaanlage zugeführt. Die Klimaanlage verhindert auf Basis der gelieferten feuchteabhängigen Sensorsignale ein Beschlagen der Innenseite der KFZ-Scheibe 1 und somit eine eventuelle Sichtbehinderung. Hierzu kann über die KFZ-Klimaanlage in bekannter Art und Weise etwa die Heizungstemperatur und/oder der Lüftungsdurchsatz definiert verändert werden usw..

Mit Hilfe der Sensoranordnung 10 wird nunmehr lediglich die relative Luftfeuchte auf derjenigen Seite der KFZ-Scheibe 1 bestimmt, auf der die Sensoranordnung 10 angebracht ist. Sobald ein vorgegebener Grenzwert für die relative Luftfeuchte RH, z.B. RH = 95%, überschritten ist, werden über die KFZ-Klimaanlage - wie vorher angedeutet - geeignete regelungstechnische Gegenmaßnahmen ergriffen. Im Vergleich zu bisherigen Lösungen zur Vermeidung des Beschlagens, die stets auf die Taupunktbestimmung auf der KFZ-Scheibe abstellten, bietet die Sensoranordnung 10 somit eine sensorisch einfache Gesamtlösung. Insbesondere kommt diese Lösung ohne weitere Sensoren, wie etwa Temperatursensoren etc. aus.

In Figur 1 ist von der Sensoranordnung 10 eine Trägerplatine 11 zu erkennen, auf der ein feuchteempfindliches Sensorelement 12 über einer Ausnehmung 15 sowie weitere elektronische Bauelemente 13a - 13e angeordnet sind. Die Trägerplatine 11 ist als handelsübliche Leiterplatte aus FR4-Material ausgebildet und enthält elektrische Leiterbahnen zum Kontaktieren der darauf angeordneten Bauelemente. Vorteilhafterweise liegt die Dicke der verwendeten Trägerplatine 11 im Bereich zwischen 1 - 2mm. Über das Anschlusskabel 20 erfolgt die Verbindung der Sensoranordnung 10 mit der nachgeordneten Signalverarbeitungseinheit, beispielsweise einer entsprechenden Klimaregelung der KFZ-Klimaanlage. Hierbei kann das Anschlusskabel 20 lösbar mit der Trägerplatine 11 verbunden werden, beispielsweise mit Hilfe einer geeigneten Steckverbindung.

Das Sensorelement 12 ist im vorliegenden Beispiel als bekannter kapazitiver Dünnschicht-Feuchtesensor ausgebildet, bei dem sich zwischen zwei Elektroden ein Dielektrikum, z.B. ein geeignetes Polymermaterial, befindet, das feuchteabhängig seine Kapazität ändert. Elektroden und Dielektrikum sind üblicherweise auf einem geeigneten Trägersubstrat, beispielsweise Glas, angeordnet. Ausgangsseitig liefert das Sensorelement 12 demzufolge in bekannter Art und Weise elektrische Signale, die ein Maß für die relative Feuchte in der jeweiligen Umgebung darstellen.

Wie in Figur 1 erkennbar, ist das Sensorelement 12 im Bereich einer rechteckförmigen Ausnehmung 15 der Trägerplatine 11 angeordnet. Über die Ausnehmung 15 in der Trägerplatine 11 wird eine gewisse Luftzirkulation im Sensorbereich sichergestellt. Die Längsachse der rechteckförmigen Ausnehmung 15 ist ferner senkrecht zur Längsachse des Sensorelementes 12 ausgerichtet. Das Sensorelement 12 ist auf derjenigen Seite der Trägerplatine 11 angeordnet, die abgewandt zur Scheibe 1 orientiert ist. Aus diesem Grund ist das Sensorelement 12, wie auch die weiteren Bauelemente 13a - 13e auf der Trägerplatine 11, als SMD-Bauteil ausgebildet. Das Sensorelement 12 weist somit auf derjenigen Seite im Bereich der Auflagefläche auf der Trägerplatine 11 elektrisch leitfähige Kontakte auf, die der Trägerplatine 11 zugewandt sind. Derart ist insbesondere eine einfache, rationelle Fertigung der Sensoranordnung 10 sichergestellt, da die Trägerplatine 11 dann automatisiert bestückbar ist.

Ebenfalls in Figur 1 ist erkennbar, dass das Sensorelement 12 eine rechteckige Form aufweist und zumindest in einer Dimension eine größere Länge aufweist wie die Ausnehmung 15, so dass derart das Sensorelement 12 in zwei Auflagebereichen auf der Trägerplatine 11 aufliegt.

Die desweiteren vorgesehenen Bauelemente 13a -13e auf der Trägerplatine 11 dienen zur Verarbeitung der Ausgangssignale des Sensorelementes 12. Eine derartige Signal-Weiterverarbeitung kann etwa in Form einer Signalverstärkung erfolgen, ferner kann die Umwandlung in ein einfach übertragbares und weiterverarbeitbares Signal vorgesehen sein; weitere Bauelemente können zum Schutz der Sensoranordnung 10 vor elektrischen Überspannungen und störender elektromagnetischer Beeinflussung dienen usw.. Vorteilhafterweise sind die verschiedenen elektronischen Bauelemente 13a - 13e auf der Trägerplatine 11 mit einem Schutzüberzug versehen, der dieselben vor mechanischen Einflüssen ebenso schützt wie vor Feuchte und Verschmutzung etc.. Hierzu ist etwa ein Schutzlack der Firma Grace geeignet, der unter der Typenbezeichnung Eccocoat vertrieben wird.

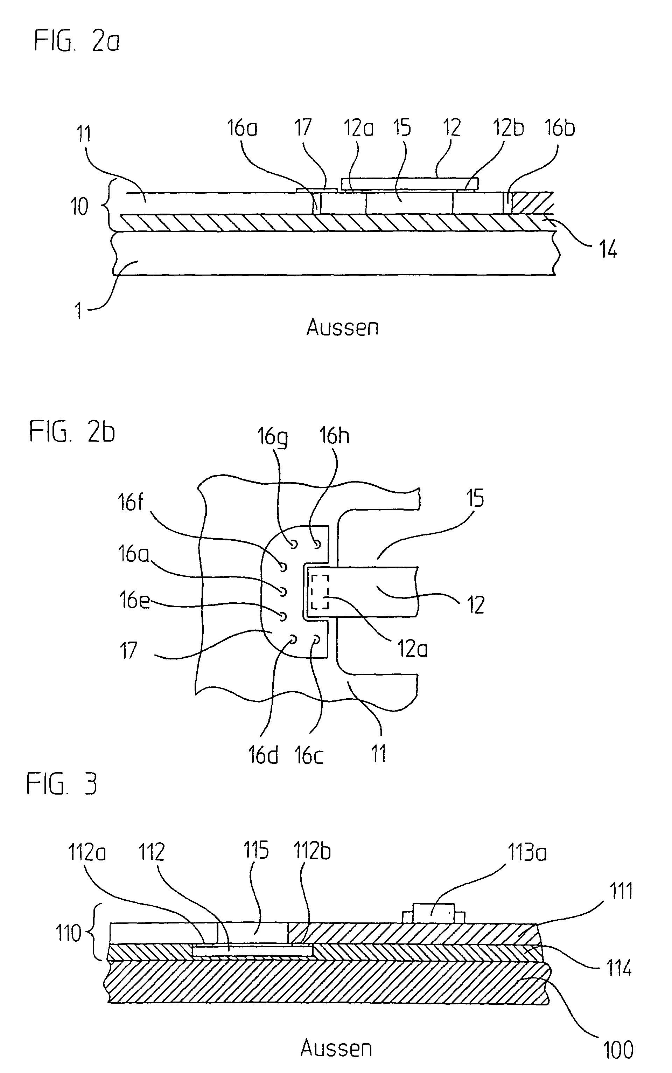

Zur weiteren Erläuterung der Sensoranordnung sei auf die Figuren 2a und 2b verwiesen, die jeweils eine Teil-Schnittansicht der Sensoranordnung 10 aus Figur 1 im Bereich der Ausnehmung 15 der Trägerplatine 11 zeigt. Dargestellt ist hierbei wiederum die KFZ-Scheibe 1 mit der darüber angeordneten Sensoranordnung 10.

Wie aus Figur 2a deutlich wird, ist die Trägerplatine 11 über eine als Klebeschicht ausgebildete Wärmeleitschicht 14 auf der KFZ-Scheibe 1, respektive der Trägerfläche, befestigt. Die Wärmeleitschicht 14 hat im dargestellten Ausführungsbeispiel verschiedene Funktionen. Primär von Bedeutung ist hierbei die möglichst gute Wärmeleitung dieser Schicht 14; desweiteren fungiert die Wärmeleitschicht 14 auch als Befestigungsmittel für die darauf angeordnete Trägerplatine 11 und das Sensorelement 12.

In einer vorteilhaften Ausführungsform ist die Wärmeleitschicht bzw. Klebeschicht als doppelseitig klebender Klebstofffilm ausgebildet, wie er etwa von der Firma *3M* unter den Typenbezeichnungen 9882, 9885 oder 9890 erhältlich ist. Wesentlich für die Auswahl einer geeigneten Klebeschicht ist hierbei, dass diese möglichst gute Wärmeleitungs-Eigenschaften aufweist. Die übliche Dicke der Klebeschicht variiert je nach verwendetem Typ etwa zwischen 0,05mm und 0,25mm.

Oberhalb der Ausnehmung 15 ist das feuchteempfindliche Sensorelement 12 angeordnet, von dem in dieser Darstellung keine weiteren Einzelheiten erkennbar sind. Geeignete Sensorelemente 12 werden etwa von der Anmelderin unter den Typenbezeichnungen *HC102* oder *HC103* vertrieben. In Figur 2a werden mit den Bezugszeichen 12a, 12b die elektrisch leitfähigen Kontakte auf der Unterseite des Sensorelementes 12 schematisch angedeutet, über die die elektrische Kontaktierung und Verbindung desselben mit den Leiterbahnen in der Trägerplatine 11 erfolgt. Die Kontakte 12a, 12b befinden sich im Sensorelement 12 im Auflagebereich, in dem dieses auf der Trägerplatine 11 außerhalb der Ausnehmung 15 aufliegt.

Das verwendete Sensorelement 12, das als SMD-Bauteil ausgebildet ist, hat eine feuchtesensitive Fläche, die ebenso wie die Kontakte 12a, 12b zur Trägerplatine 11 hin orientiert ist. Die Kontakte 12a, 12b und die feuchtesensitive Fläche sind bei dieser Ausführungsform eines feuchteempfindlichen Sensorelementes 12 demzufolge auf der gleichen Seite angeordnet.

Ebenfalls in Figur 2a sind vertikale Bohrungen 16a, 16b in der Trägerplatine 11 erkennbar, die unmittelbar benachbart zur Ausnehmung 15 plaziert sind. Über diese Bohrungen 16a, 16b wird eine gute Wärmeleitung zwischen der Trägerfläche bzw. Scheibe 1 und dem Sensorelement 12 sichergestellt. In der Draufsicht auf einen Teilbereich der Sensoranordnung in Figur 2b ist erkennbar, dass in eine Vielzahl derartiger Bohrungen 16a - 16h benachbart zur Ausnehmung 15 angeordnet ist.

Vorzugsweise werden die Durchmesser der Bohrungen 16a - 16h identisch zu den Durchmessern der ansonsten auf der Trägerplatine 11 vorgesehenen Durchkontaktierungen bzw. Bohrungen gewählt, d.h. es werden Durchmesser zwischen 0,3mm und 0,8mm gewählt. Ferner ist vorzuziehen - wie in Figur 2b erkennbar - mehrere separate Bohrungen 16a - 16h mit kleineren Durchmessern anstelle weniger Bohrungen mit größeren Durchmessern in der Trägerplatine 11 anzubringen.

Die verschiedenen Bohrungen 16a - 16h weisen ferner eine möglichst gut wärmeleitfähige Beschichtung im Bohrungsbereich auf, beispielsweise eine Kupfer-Beschichtung, die eine gute Wärmeleitung zwischen der Trägerfläche 1 und dem Sensorelement 12 über die Bohrungen 16a - 16h sicherstellt. Die wärmeleitfähige Beschichtung im Bohrungsbereich ist vorzugsweise möglichst dick ausgebildet, etwa dicker als 30µm. Eine zusätzliche Verzinnung einer derartigen Kupfer-Beschichtung trägt nochmals zur Verbesserung der Wärmeleitungs-Eigenschaften bei.

Schließlich erweist es sich als vorteilhaft hinischtlich der Wärmeleitung, wenn derartige wärmeleitfähige Beschichtungen der Bohrungen 16a, 16b auf der Seite der Trägerplatine 11 miteinander wärmeleitend verbunden werden, die in Richtung des Sensorelementes 12 orientiert ist. Hierzu kann etwa eine entsprechende Beschichtung 17 der Trägerplatine 11 in einem Flächenbereich um das Sensorelement 12 und seine Anschlusskontakte 12a, 12b vorgesehen werden, wie dies in Figur 2b erkennbar ist. Derart wird eine thermisch leitende Verbindung zwischen den verschiedenen Bohrungen 16a - 16h hergestellt.
Die Bohrungen 16a - 16h in der Trägerplatine 11 sowie die Verwendung der Wärmeleitschicht14 mit guten Wärmeleitungseigenschaften stellen sicher, dass das Sensorelement 12 und die Trägerfläche 1 bzw. die Scheiben-Innenseite im Messbetrieb eine weitgehend identische Temperatur besitzen. Zur guten thermischen Kopplung trägt in der Sensoranordnung im übrigen auch die Ausbildung des Sensorelementes 12 als SMD-Bauteil bei, da derart ein inniger thermischer Kontakt zu den dem Sensorelement 12 vorgeordneten Schichten sichergestellt ist.

Ein möglichst guter thermischer Kontakt zwischen der Seite der Scheibe 1, auf der ein Beschlagen verhindert werden soll, und dem Sensorelement 12, ist somit für die Sensoranordnung 10 wesentlich. Zumindest ist jedoch zu gewährleisten, dass eine bestimmte - möglichst geringe - Temperaturdifferenz zwischen Trägerfläche 1 und Sensorelement 12 im Messbetrieb nicht überschritten wird. Im vorliegenden Beispiel resultiert etwa eine maximale Temperaturdifferenz von ca. 0.5°C zwischen der dem Sensorelement 12 zugewandten Seite der Scheibe 1 und Sensorelement 12. Eine derartiger Temperaturgradient ist hinsichtlich der Messung noch als unkritisch zu beurteilen.

Eine weitere Maßnahme zur Optimierung der Wärmeleitungs-Eigenschaften in diesem Bereich der Sensoranordnung 10 wäre neben den oben diskutierten Maßnahmen im Zusammenhang mit der Bohrungs-Beschichtung etwa das Vorsehen einer weiteren gut wärmeleitfähigen, flächigen Beschichtung auf der Seite der Trägerplatine zumindest im Bohrungsbereich, die der Wärmeleitschicht 14 zugewandt ist.

Eine Ausführungsform der erfindungsgemäßen Sensoranordnung sei nachfolgend anhand der Figur 3 erläutert, die wiederum eine Teil-Schnittansicht der Sensoranordnung zeigt.

Auf der Innenseite der KFZ-Scheibe 100 bzw. der entsprechenden Trägerfläche, deren Beschlagen verhindert werden soll, ist die erfindungsgemäße Sensoranordnung 110 angeordnet. Diese umfasst eine Wärmeleitschicht 114, ausgebildet als Klebeschicht, sowie eine darüber angeordnete Trägerplatine 111, die eine Ausnehmung 115 aufweist. Im Bereich der Ausnehmung 115 ist das feuchteempfindliche Sensorelement 112 auf der Wärmeleitschicht 114 angeordnet. Schematisch angedeutet ist in Figur 3 desweiteren ein elektronisches Bauelement 113a, das zur weiteren Signalverarbeitung dient und auf der Seite der Trägerplatine 111 angeordnet ist, die abgewandt zur KFZ-Scheibe 100 orientiert ist.

Hinsichtlich geeigneter Materialien für die Klebeschicht und für die Trägerplatine sei an dieser Stelle lediglich auf das vorhergehende Beispiel verwiesen.

Unterschiedlich zum vorhergehenden Beispiel erfolgt die Anordnung bzw. Plazierung des Sensorelementes 112 in der erfindungsgemäßen Sensoranordnung 110. So ist das das Sensorelement 112 im Bereich der Ausnehmung 115 nunmehr unmittelbar auf der als Klebeschicht ausgebildeten Wärmeleitschicht 114 angeordnet, wobei die feuchteempfindliche Fläche des Sensorelementes 112 abgewandt zur KFZ-Scheibe orientiert ist. Beispielsweise wird ein SMD-Dünnschicht-Feuchtesensor wiederum direkt auf einem doppelseitig klebenden Klebstofffilm angeordnet, wobei die feuchteempfindliche Fläche des Sensorelementes 112 zur Trägerplatine 111 hin orientiert ist.

Die elektrische Kontaktierung des Sensorelementes 112 erfolgt von derjenigen Seite des Sensorelementes 112 aus, die abgewandt zur KFZ-Scheibe bzw. Trägerfläche 100 orientiert ist. Hierzu sind auf dieser Seite des Sensorelementes 112 Kontakte 112a, 112b angeordnet, über die die Verbindung mit den elektrischen Leiterbahnen in der Trägerplatine 111 erfolgt. Es kann in dieser Ausführungsform der erfindungsgemäßen Sensoranordnung 110 demzufolge das gleiche feuchteempfindliche SMD-Sensorelement verwendet werden wie im vorherigen Beispiel; lediglich die Orientierung der feuchteempfindlichen Fläche bzw. der Kontakte 112a, 112b ist nunmehr abgewandt von der Scheibe gewählt.

Alternativ zur dargestellten Variante ist zur elektrischen Kontaktierung auch grundsätzlich die Verwendung von Bonddrähten möglich, über die die Kontakte des Sensorelementes mit den Leiterbahnen in der Trägerplatine elektrisch verbunden werden.

Als vorteilhaft an der in Figur 3 dargestellten Variante der erfindungsgemäßen Sensoranordnung ist aufzuführen, dass das Sensorelement 112 nunmehr noch dichter an derjenigen Seite der KFZ-Scheibe bzw. Trägerfläche 100 plaziert ist, auf der ein eventuelles Beschlagen detektiert werden soll. Es ist somit in noch höherem Maße sichergestellt, dass eine möglichst geringe Temperaturdifferenz zwischen dem Sensorelement 112 und der Trägerfläche 100 resultiert bzw. diese annähernd die gleiche Temperatur im Messbetrieb aufweisen.

In einer weiteren - nicht dargestellten - Ausführungsform der vorliegenden Erfindung kann schließlich vorgesehen werden, die als Klebeschicht ausgebildete Wärmeleitschicht aus den beiden vorab erläuterten Varianten durch eine Schicht zu ersetzen, die lediglich eine gute Wärmeleitfähigkeit aufweist, jedoch nicht-klebend ausgelegt ist. Hierzu eignen sich z.B. keramikgefüllte Polymer-Folien, die unter der Bezeichnung *Keratherm®* von der Firma *Kerafol, Keramische Folien GmbH* vertrieben werden. Die Befestigung der Sensoranordnung auf der Scheibe bzw. Trägerfläche muss in einem derartigen Fall dann über geeignete mechanische Befestigungsmittel erfolgen. Hierzu kann beispielsweise vorgesehen werden, den Fußteil eines Rückspiegels als Befestigungsmittel zu nutzen; alternativ könnte als mechanisches Befestigungsmittel auch ein Spalt am oberen Scheibenrand zwischen der Fahrzeug-Decke und der Scheibe genutzt werden usw..

Die vorliegende Erfindung ist somit nicht auf die beschriebene Ausführungsform beschränkt; es existieren im Rahmen der erfindungsgemäßen Überlegungen vielmehr eine Reihe weiterer Ausführungsvarianten.

## Patentansprüche

1. Sensoranordnung zur Anordnung auf einer Trägerfläche, bestehend aus
- einer zur Anordnung auf der Trägerfläche (100) vorgesehenen Wärmeleitschicht (114), die eine gute Wärmeleitfähigkeit aufweist,
- einer Trägerplatine (111) mit mindestens einer Ausnehmung (115),
- einem feuchteempfindlichen Sensorelement (112), das im Bereich der Ausnehmung (115) der Trägerplatine (111) angeordnet ist, wobei über die Wärmeleitschicht (114) thermischer Kontakt zwischen dem Sensorelement (112) und der Trägerfläche (100) sichergestellt ist,
- Befestigungsmitteln zur Befestigung der Sensoranordnung auf der Trägerfläche (100).

2. Sensoranordnung nach Anspruch 1, wobei als Trägerfläche (100) die dem Fahrgastraum zugewandte Innenseite einer KFZ-Scheibe fungiert.

3. Sensoranordnung nach Anspruch 1, wobei auf der Trägerplatine (111) weitere Bauelemente (113a) zur Weiterverarbeitung von Ausgangssignalen des Sensorelementes (112) angeordnet sind.

4. Sensoranordnung nach Anspruch 3, wobei die Bauelemente (113a) mit einem Schutzüberzug versehen sind.

5. Sensoranordnung nach Anspruch 1, wobei die Trägerplatine (111) eine lösbare Verbindung zu einem Anschlusskabel aufweist.

6. Sensoranordnung nach Anspruch 1, wobei die Trägerplatine (111) aus FR4-Material besteht.

7. Sensoranordnung nach Anspruch 1, wobei das Sensorelement (112) als kapazitiver Dünnschicht-Feuchtesensor ausgebildet ist, der ein zwischen mehreren Elektroden angeordnetes feuchteempfindliches Dielektrikum umfasst.

8. Sensoranordnung nach Anspruch 1, wobei die Wärmeleitschicht (114) als doppelseitig klebender Klebstofffilm ausgebildet ist, der gleichzeitig als Befestigungsmittel dient.

9. Sensoranordnung nach Anspruch 1, wobei die Wärmeleitschicht als Klebeschicht ausgebildet ist.

10. Sensoranordnung nach Anspruch 1, wobei das Sensorelement (112) auf derjenigen Seite elektrisch leitfähige Kontakte (112a, 112b) aufweist, die abgewandt zur Trägerfläche (100) orientiert ist.

11. Sensoranordnung nach Anspruch 1, wobei die Wärmeleitschicht (114) als nicht-klebende Schicht mit guter Wärmeleitfähigkeit ausgebildet ist.

12. Sensoranordnung nach Anspruch 11, wobei die Wärmeleitschicht (114) als keramikgefüllte Polymer-Folie ausgebildet ist.

13. Sensoranordnung nach Anspruch 11, wobei die Befestigungsmittel als mechanische Befestigungsmittel ausgebildet sind.

14. Sensoranordnung nach Anspruch 13, wobei als mechanisches Befestigungsmittel der Fußteil eines Rückspiegels dient.

15. Sensoranordnung nach Anspruch 1, wobei die Trägerplatine benachbart zur Ausnehmung ein oder mehrere Bohrungen aufweist.

16. Sensoranordnung nach Anspruch 15, wobei die Bohrungen mit einer wärmeleitfähigen Beschichtung versehen sind.

17. Sensoranordnung nach Anspruch 7, wobei die feuchteempfindliche Fläche des Sensorelementes zur Trägerplatine hin orientiert angeordnet ist.

18. Sensoranordnung nach Anspruch 7, wobei das Sensorelement als SMD-Bauteil ausgebildet ist.

## Claims

1. Sensor arrangement for disposing on a carrier face, comprising
- a heat conductive layer (114) which is provided for disposing on the carrier face (100) and has good heat conductivity,
- a carrier board (111) having at least one recess (115),
- a humidity-sensitive sensor element (112) which is disposed in the region of the recess (115) of the carrier board (111), wherein thermal contact between the sensor element (112) and the carrier face (100) is ensured via the heat conductive layer (114),
- attachment means for attaching the sensor arrangement on the carrier face (100).

2. Sensor arrangement according to claim 1, wherein the inside of an automotive vehicle window which is orientated towards the passenger compartment functions as carrier face (100).

3. Sensor arrangement according to claim 1, wherein further components (113a) for processing output signals of the sensor element (112) are disposed on the carrier board (111).

4. Sensor arrangement according to claim 3, wherein the components (113a) are provided with a protective coating.

5. Sensor arrangement according to claim 1, wherein the carrier board (111) has a detachable connection to a connection cable.

6. Sensor arrangement according to claim 1, wherein the carrier board (111) is made of FR4 material.

7. Sensor arrangement according to claim 1, wherein the sensor element (112) is configured as a capacitive, thin-layer humidity sensor, which comprises a humidity-sensitive dielectric which is disposed between a plurality of electrodes.

8. Sensor arrangement according to claim 1, wherein the heat conductive layer (114) is configured as an adhesive film which is adhesive on both sides and serves at the same time as attachment means.

9. Sensor arrangement according to claim 1, wherein the heat . conductive layer is configured as an adhesive layer.

10. Sensor arrangement according to claim 1, wherein the sensor element (112) has electrically conductive contacts (112a, 112b) on that side which is orientated facing away from the carrier board (100).

11. Sensor arrangement according to claim 1, wherein the heat conductive layer (114) is configured as a non-adhesive layer with good heat conductivity.

12. Sensor arrangement according to claim 11, wherein the heat conductive layer (114) is configured as a ceramic-filled polymer film.

13. Sensor arrangement according to claim 11, wherein the attachment means are configured as mechanical attachment means.

14. Sensor arrangement according to claim 13, wherein the foot part of a rear-view mirror serves as mechanical attachment means.

15. Sensor arrangement according to claim 1, wherein the carrier board has one or more borings adjacent to the recess.

16. Sensor arrangement according to claim 15, wherein the borings are provided with a heat conductive coating.

17. Sensor arrangement according to claim 7, wherein the humidity-sensitive, face of the sensor element is orientated towards the carrier board.

18. Sensor arrangement according to claim 7, wherein the sensor element is configured as an SMD component.

## Revendications

1. Dispositif capteur destiné à être installé sur une surface de support et constitué
- d'une couche conductrice de chaleur (114), présentant une bonne conductibilité thermique, prévue pour la disposition sur la surface de support (100),
- d'une plaque support (111) comportant au moins un évidement (115),
- d'un élément capteur (112) sensible à l'humidité qui est disposé dans la région de l'évidement (115) de la plaque support (111), la couche conductrice de chaleur (114) établissant un contact thermique entre l'élément capteur (112) et la surface de support (100),
- de moyens de fixation pour fixer le dispositif capteur à la surface de support (100).

2. Dispositif capteur selon la revendication 1, dans lequel la face intérieure, tournée vers l'habitacle, d'une vitre de véhicule automobile remplit la fonction de la surface de support (100).

3. Dispositif capteur selon la revendication 1, dans lequel des composants (113a) supplémentaires, destinés à assurer le traitement ultérieur de signaux de sortie de l'élément capteur (112), sont disposés sur la plaque support (111).

4. Dispositif capteur selon la revendication 3, dans lequel les composants (113a) sont pourvus d'une couche protectrice.

5. Dispositif capteur selon la revendication 1, dans lequel la plaque support (111) présente une liaison séparable avec un câble de connexion.

6. Dispositif capteur selon la revendication 1, dans lequel la plaque support (111) est réalisée à partir d'un matériau FR4.

7. Dispositif capteur selon la revendication 1, dans lequel l'élément capteur (112) est réalisé sous forme de capteur d'humidité capacitif à couche mince, qui comprend un diélectrique sensible à l'humidité, disposé entre plusieurs électrodes.

8. Dispositif capteur selon la revendication 1, dans lequel la couche conductrice de chaleur (114) est réalisée sous forme de film adhésif à double face, qui sert en même temps de moyen de fixation.

9. Dispositif capteur selon la revendication 1, dans lequel la couche conductrice de chaleur est réalisée sous forme de couche adhésive.

10. Dispositif capteur selon la revendication 1, dans lequel l'élément capteur (112) présente des contacts (112a, 112b) électroconducteurs sur la face qui est éloignée de la surface de support (100).

11. Dispositif capteur selon la revendication 1, dans lequel la couche conductrice de chaleur (114) est réalisée sous forme de couche non adhésive ayant une bonne conductibilité de chaleur.

12. Dispositif capteur selon la revendication 11, dans lequel la couche conductrice de chaleur (114) est réalisée comme feuille polymère à charge céramique.

13. Dispositif capteur selon la revendication 11, dans lequel les moyens de fixation sont réalisés comme moyens de fixation mécaniques.

14. Dispositif capteur selon la revendication 13, dans lequel le pied d'ancrage d'un rétroviseur sert de moyen de fixation mécanique.

15. Dispositif capteur selon la revendication 1, dans lequel la plaque support, dans le voisinage de l'évidement, présente un ou plusieurs trous.

16. Dispositif capteur selon la revendication 15, dans lequel les trous sont pourvus d'un revêtement conducteur de la chaleur.

17. Dispositif capteur selon la revendication 7, dans lequel la surface sensible à l'humidité de l'élément capteur est orientée en direction de la plaque support.

18. Dispositif capteur selon la revendication 7, dans lequel l'élément capteur est réalisé sous forme de composant CMS.
